# EUROPEAN PATENT APPLICATION

(11) **EP 3 185 631 A1**
(43) Date of publication of application: **28.06.2017**
(21) Application number: 15834426.7
(22) Date of filing: 09.07.2015
(51) Int. Cl.: H04W 72/04

(54) **METHOD, DEVICE AND SYSTEM FOR TRANSMITTING CSI-RS**

(30) Priority: 21.08.2014 CN 201410416112
(71) Applicant: China Academy of Telecommunications Technology, Hai Dian District Beijing 100191 (CN)
(72) Inventor: XU, Weijie, Beijing 100191 (CN); PAN, Xueming, Beijing 100191 (CN); SHEN, Zukang, Beijing 100191 (CN)
(74) Representative: dompatent von Kreisler Selting Werner - Partnerschaft von Patent- und Rechtsanwälten mbB
(86) International application number: PCT/CN2015/083653
(87) International publication number: WO 2016/026357

(57) **Abstract**

The present disclosure relates to the field of radio communication technology, and provides a method, a device and a system for transmitting a CSI-RS, so as to solve the problem in the related art where a small amount of resources are configured to the CSI-RS. A network side device selects a RE corresponding to a CSI-RS pilot resource configuration from pilot resource mapping patterns of the CSI-RS within the special subframe, as a RE for carrying the CSI-RS, and transmit the CSI-RS through the selected RE.

## Description

### CROSS REFERENCE TO RELATED APPLICATIONS

The present application claims a priority of the Chinese Patent Application No.201410416112.5 filed on August 21, 2014, which is incorporated herein by reference in its entirety.

### TECHNICAL FIELD

The present disclosure relates to the field of radio communication technology, in particular to a method, a device and a system for transmitting Channel State Information Reference Signal (CSI-RS).

### BACKGROUND

Along with the development of the technology and the explosive growth of the data services, more and more low-power base stations, such as Pico cells and Femto cells (Home NodeB), have been deployed so as to provide small, local coverage, and these base stations may be collectively called as small cells. Through the deployment of the small cells, it is able to not only expand the coverage of a Macro cell, but also increase the throughput at a specific region. Usually, the more the small cells deployed in a network, the more User Equipments (UEs) that may be served by the small cells to achieve a performance gain and remarkably increase the entire throughput of the network. It can be anticipated that, in an actual network, there will be probably a large number of small cells deployed densely at a geographical region where a large quantity of service requirements need to be met.

In a scenario where the small cells are actually deployed, these small cells may each be provided with a separate cell identifier (ID), or a plurality of transmission points (TPs) adjacent to each other may be provided with an identical cell ID. A small amount of UEs are served by each small cell or TP, so a service load of each small cell or TP may fluctuate greatly within different time periods. In order to reduce the power consumption of the small cell or TP and reduce the interference of the small cell or TP on the other small cells or TPs, the small cell or TP may be turned on or off in accordance with an actual service condition using a small cell On/Off technique. For example, in the case of no service transmission, the small cell or TP may be turned off, and otherwise it may be turned on. In order to enable the UE to discover the small cell or TP that has been turned off, the small cell or TP needs to transmit a discovery signal periodically. Currently, a conclusion has been achieved by the 3^{rd} Generation Partnership Project (3GPP), i.e., the discovery signal may include a Primary Synchronization Signal (PSS)/Secondary Synchronization Signal (SSS) /Cell-specific Reference Signal (CRS), or a CSI-RS may be additionally configured so as to facilitate the identification of the small cell or TP. In order to enable the UE to measure the discovery signal within a measurement gap (a time interval), a length of the discovery signal is limited to be smaller than or equal to 5ms.

Along with the development of the services, the small cells may be deployed densely or even ultra-densely. At this time, at least the small cells or TPs adjacent to each other need to be configured with separate CSI-RS resources, so as to ensure the UE to identify a large number of small cells or TPs, thereby to reduce the interference among the CSI-RSs for the small cells or TPs. Hence, it is necessary to reserve sufficient CSI-RS configuration resources in one discovery signal burst. However, in a Time Division Duplexing (TDD)-Long Term Evolution (LTE) system, for some uplink/downlink configurations, e.g., uplink/downlink configuration #0, merely subframe 0 or 5 may be configured for the transmission of the CSI-RS within the transmission time, i.e., at most 5ms, of the discovery signal. However, the CSI-RSs cannot be transmitted over symbols within subframe 0 or 5 which are in conflict with such signals (channels) as PSS/SSS/Physical Broadcast Channel (PBCH), so the resources for the transmission of the CSI-RSs may be limited. For example, at most 16 single-antenna port CSI-RS resources may be configured within subframe 5, and merely 4 single-antenna port CSI-RS resources may be configured within subframe 0.

In a word, for the TDD system, merely a small amount of resources in the discovery signal burst may be configured for transmitting the CSI-RSs.

### SUMMARY

An object of the present disclosure is to provide a method, a device and a system for transmitting a CSI-RS, so as to solve the problem in the art where merely a small amount of resources in the discovery signal burst may be configured for transmitting the CSI-RS in a TDD system.

In one aspect, the present disclosure provides in some embodiments a method for transmitting a CSI-RS, including steps of: determining, by a network side device, that the CSI-RS is to be transmitted to a UE within a special subframe; selecting, by the network side device, a resource element (RE) corresponding to a CSI-RS pilot resource configuration from pilot resource mapping patterns of the CSI-RS within the special subframe, as a RE for carrying the CSI-RS; and transmitting, by the network side device, the CSI-RS through the selected RE.

According to the method in the embodiments of the present disclosure, the CSI-RS may be transmitted within the special subframe, and through a channel CSI-RS pilot pattern added in the special subframe, it is able to increase, in the discovery signal burst for a TDD system, the number of the configurations that may serve as the CSI-RSs for a discovery signal, thereby to improve the system performance.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary Cyclic Prefix (CP), one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a Physical Downlink Control Channel (PDCCH), a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In a possible embodiment of the present disclosure, subsequent to the step of selecting, by the network side device, the RE corresponding to the CSI-RS pilot resource configuration from the CSI-RS pilot resource mapping pattern within the special subframe, the method further includes notifying, by the network side device, the UE of pilot resource configuration information about the CSI-RS to be transmitted in the special subframe.

In another aspect, the present disclosure provides in some embodiments a method for transmitting a CSI-RS, including steps of: receiving, by a UE, from a network side device pilot resource configuration information about the CSI-RS to be transmitted in a special subframe; and receiving, by the UE, the CSI-RS on a RE determined in accordance with the received pilot resource configuration information about the CSI-RS.

According to the method in the embodiments of the present disclosure, the CSI-RS may be transmitted within the special subframe. Through the addition of a channel CSI-RS pilot pattern in the special subframe, it is able to increase, in the discovery signal burst for a TDD system, the number of the configurations that may serve as the CSI-RSs for a discovery signal, thereby to improve the system performance.

In a possible embodiment of the present disclosure, the pilot resource configuration about the CSI-RS is a resource configuration selected from pilot resource mapping patterns of the CSI-RS within the special subframe.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In yet another aspect, the present disclosure provides in some embodiments a network side device for transmitting a CSI-RS, including: a determination module configured to determine that the CSI-RS is to be transmitted to a UE within a special subframe; a selection module configured to select a RE corresponding to a CSI-RS pilot resource configuration from pilot resource mapping patterns of the CSI-RS within the special subframe, as a RE for carrying the CSI-RS; and a transmission module configured to transmit the CSI-RS through the selected RE.

According to the network side device in the embodiments of the present disclosure, the CSI-RS may be transmitted within the special subframe, and through a channel CSI-RS pilot pattern added in the special subframe, it is able to increase, in the discovery signal burst for a TDD system, the number of the configurations that may serve as the CSI-RSs for a discovery signal, thereby to improve the system performance.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In a possible embodiment of the present disclosure, the transmission module is further configured to notify the UE of pilot resource configuration information about the CSI-RS to be transmitted in the special subframe.

In still yet another aspect, the present disclosure provides in some embodiments a UE for transmitting a CSI-RS, including: a reception module configured to receive from a network side device pilot resource configuration information about the CSI-RS to be transmitted in a special subframe; and a processing module configured to receive the CSI-RS on a RE determined in accordance with the received pilot resource configuration information about the CSI-RS.

According to the UE in the embodiments of the present disclosure, the CSI-RS may be transmitted within the special subframe. Through the addition of a channel CSI-RS pilot pattern in the special subframe, it is able to increase, in the discovery signal burst for a TDD system, the number of the configurations that may serve as the CSI-RSs for a discovery signal, thereby to improve the system performance.

In a possible embodiment of the present disclosure, the pilot resource configuration about the CSI-RS is a resource configuration selected from pilot resource mapping patterns of the CSI-RS within the special subframe.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In still yet another aspect, the present disclosure, the present disclosure provides in some embodiments a system for transmitting a CSI-RS, including a network side device and a UE. The network side device includes: a determination module configured to determine that the CSI-RS is to be transmitted to a UE within a special subframe; a selection module configured to select a RE corresponding to a CSI-RS pilot resource configuration from pilot resource mapping patterns of the CSI-RS within the special subframe, as a RE for carrying the CSI-RS; and a transmission module configured to transmit the CSI-RS through the selected RE. The UE includes: a reception module configured to receive from the network side device pilot resource configuration information about the CSI-RS to be transmitted in the special subframe; and a processing module configured to receive the CSI-RS on the RE determined in accordance with the received pilot resource configuration information about the CSI-RS.

According to the embodiments of the present disclosure, the network side device may select the RE corresponding to the CSI-RS pilot resource configuration from the CSI-RS pilot resource mapping pattern within the special subframe, as the RE for carrying the CSI-RS, and transmit the CSI-RS through the selected RE. The CSI-RS may be transmitted within the special subframe, and through a channel CSI-RS pilot pattern added in the special subframe, it is able to increase, in the discovery signal burst for a TDD system, the number of the configurations that may serve as the CSI-RSs for a discovery signal, thereby to improve the system performance.

### BRIEF DESCRIPTION OF THE DRAWINGS

Fig.1 is a schematic view showing a system for transmitting a CSI-RS according to the first embodiment of the present disclosure;
Fig.2 is a schematic view showing a CSI-RS pilot pattern for special subframe configurations #1, #2, #6 and #7 according to the second embodiment of the present disclosure;
Fig.3 is a schematic view showing a CSI-RS pilot pattern for special subframe configurations #3, #4 and #8 according to the third embodiment of the present disclosure;
Fig.4 is a schematic view showing a CSI-RS pilot pattern for special subframe configurations #1, #2, #6 and #7 according to the fourth embodiment of the present disclosure;
Fig.5 is a schematic view showing a CSI-RS pilot pattern for special subframe configurations #2, and #7 according to the fifth embodiment of the present disclosure;
Fig.6 is a schematic view showing a CSI-RS pilot pattern for special subframe configurations #3, #4 and #8 according to the sixth embodiment of the present disclosure;
Fig.7 is a schematic view showing a CSI-RS pilot pattern for special subframe configuration #9 according to the seventh embodiment of the present disclosure;
Fig.8 is a schematic view showing a network side device in the system for transmitting the CSI-RS according to the eighth embodiment of the present disclosure;
Fig.9 is a schematic view showing a UE in the system for transmitting the CSI-RS according to the ninth embodiment of the present disclosure;
Fig.10 is another schematic view showing a network side device in the system for transmitting the CSI-RS according to the tenth embodiment of the present disclosure;
Fig.11 is another schematic view showing a UE in the system for transmitting the CSI-RS according to the eleventh embodiment of the present disclosure;
Fig.12 is a flow chart of a method for transmitting a CSI-RS according to the twelfth embodiment of the present disclosure; and
Fig.13 is another flow chart of a method for transmitting a CSI-RS according to the thirteenth embodiment of the present disclosure.

### DETAILED DESCRIPTION

According to the embodiments of the present disclosure, a network side device may select a RE corresponding to a CSI-RS pilot resource configuration from pilot resource mapping patterns of a CSI-RS within a special subframe, as a RE for carrying a CSI-RS, and transmit the CSI-RS through the selected RE. The CSI-RS may be transmitted within the special subframe, and through a channel CSI-RS pilot pattern added in the special subframe, it is able to increase, in the discovery signal burst for a TDD system, the number of the configurations that may serve as the CSI-RSs for a discovery signal, thereby to improve the system performance.

The present disclosure will be described hereinafter in more details in conjunction with the drawings and the embodiments.

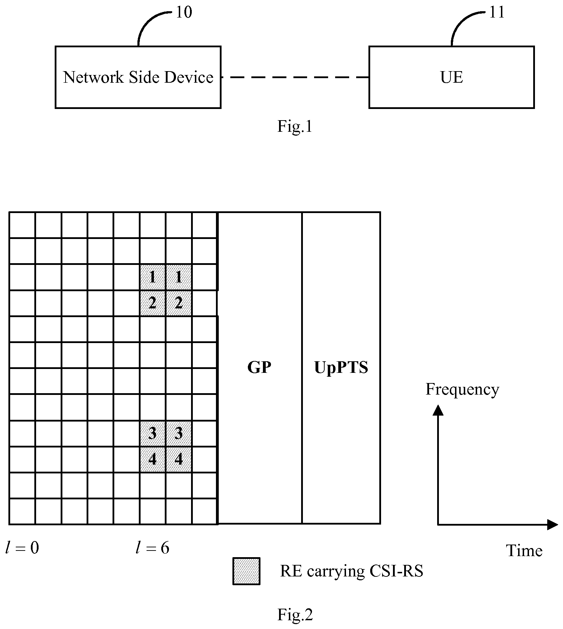

As shown in Fig.1, the present disclosure provides in the first embodiment a system for transmitting a CSI-RS, which includes a network side device 10 and a UE 11. The network side device 10 is configured to determine that the CSI-RS is to be transmitted to a UE within a special subframe, selecting a RE corresponding to a CSI-RS pilot resource configuration from pilot resource mapping patterns of the CSI-RS within the special subframe, as a RE for carrying the CSI-RS, and transmit the CSI-RS through the selected RE. The UE 11 is configured to receive from the network side device pilot resource configuration information about the CSI-RS to be transmitted in the special subframe, and receive the CSI-RS on the RE determined in accordance with the received the pilot resource configuration information about the CSI-RS.

In a possible embodiment of the present disclosure, the CSI-RS may include, but not limited to, a discovery signal for a mall cell or TP, and a signal transmitted for measurement.

During the implementation, the network side device may determine whether or not the CSI-RS is to be transmitted to the UE within the special subframe in accordance with a configuration of the CSI-RS. The network side device may further determine that the CSI-RS is to be transmitted to the UE within the special subframe in the case that there are insufficient CSI-RS configurations within the other downlink subframes.

In a possible embodiment of the present disclosure, after the network side device has determined the RE for carrying the CSI-RS within the special subframe, it may notify the UE of the RE, e.g., through Radio Resource Control (RRC) signaling. Correspondingly, upon the receipt of a notification, the UE may determine that the CSI-RS is to be transmitted within the special subframe, and determine the RE in accordance with the received pilot resource configuration information about the CSI-RS.

The pilot resource configuration of the CSI-RS is a resource configuration selected from the CSI-RS pilot resource mapping pattern within the special subframe.

The network side device may select the CSI-RS pilot resource configuration in accordance with the practical need, or randomly.

During the implementation, the network side device 10 may determine the RE carrying the CSI-RS within the special subframe in various modes, and some of them will be described hereinafter.

Mode 1: the network side device may use an existing CSI-RS pilot resource mapping pattern, with the REs occupied by a downlink user-specific pilot signal being excluded.

To be specific, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

During the implementation, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

During the implementation, Table 1 shows the special subframe configurations.

**Table 1: TDD special subframe configuration (unit: symbol)**

| Special subframe configurations | Ordinary CP | | | Extended CP | | |
|---|---|---|---|---|---|---|
| | Downlink pilot timeslot (DwPTS) | Guard period (GP) | Uplink pilot timeslot (UpPTS) | DwPTS | GP | UpPTS |
| 0 | 3 | 10 | 1 | 3 | 8 | 1 |
| 1 | 9 | 4 | | 8 | 3 | |
| 2 | 10 | 3 | | 9 | 2 | |
| 3 | 11 | 2 | | 10 | 1 | |
| 4 | 12 | 1 | | 3 | 7 | |
| 5 | 3 | 9 | 2 | 8 | 2 | 2 |
| 6 | 8 | 3 | | 9 | 1 | |
| 7 | 10 | 2 | | 5 | 5 | |
| 8 | 11 | 1 | | - | - | - |
| 9 | 6 | 6 | | | | |

The parts of symbol pairs may vary along with the special subframe configurations, and some examples thereof will be given as follows. 1. In the case that, for an ordinary Cyclic Prefix (CP), one of special subframe configurations #1, #2, #6 and #7 is adopted, the parts of symbol pairs include a symbol pair consisting of a sixth symbol and a seventh symbol. 2. In the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol. 3. In the case that, for an extended CP, one of special subframe configurations #1, #2, #3, #5 and #6 are adopted, the parts of symbol pairs include a symbol pair consisting of a fifth symbol and the sixth symbol.

It should be appreciated that, the above RE pairs are for illustrative purposes only, and the present disclosure is not limited thereto, i.e., the other RE pairs may also be applicable.

Mode 2: the network side device may select the symbol pairs for transmitting the CSI-RS on the symbols other than the symbols within the special subframe occupied by a PDCCH, a PSS and a CRS, with the REs occupied by the downlink user-specific pilot signal being excluded.

To be specific, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by the PDCCH, PSS and CRS, and the downlink user-specific pilot signal is specified in 3GPP TS 36.211 Release 11.

The specific symbols may vary along with the special subframe configurations, and some examples thereof will be given as follows. 1. In the case that, for an ordinary CP, one of special subframe configurations #1, #2, #6 and #7 is adopted, the specific symbols include a fifth symbol and a sixth symbol of the special subframe. 2. In the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol. 3. In the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol. 4. In the case that, for the ordinary CP, a special subframe configuration #9 is adopted, the specific symbols include a symbol pair consisting of the fourth symbol and the sixth symbol.

It should be appreciated that, the above RE pairs are for illustrative purposes only, and the present disclosure is not limited thereto, i.e., the other RE pairs may also be applicable.

In the embodiments of the present disclosure, each subframe or special subframe includes, from the left, the first symbol, the second symbol, and so on.

The followings are some examples where the CSI-RS is transmitted on the REs of the existing CSI-RS pilot resource mapping pattern other than the REs occupied by the downlink user-specific pilot signal.

### Example 1

In the case that, for the ordinary CP, a special subframe configuration #1, #2, #6 or #7 is adopted, the CSI-RS may be transmitted on the REs occupied by the sixth and seventh symbols of the special subframe in accordance with the CSI-RS pilot resource mapping pattern specified by 3GPP TS 36.211 Release 11, other than the REs occupied by the downlink user-specific pilot signal. The resource pattern is shown in Fig.2.

For example, in the case that the CSI-RS is to transmitted through one or two antenna ports, it may support four CSI-RS configurations and may be mapped to four RE pairs 1, 2, 3 and 4, i.e., a RE pair consisting of RE1 and RE1, a RE pair consisting of RE2 and RE2, a RE pair consisting of RE3 and RE3, and a RE pair consisting of RE4 and RE4. In the case that the CSI-RS is to be transmitted through four antenna ports, it may be mapped to a resource pair {1, 3} or {2, 4}, i.e., two kinds of four-antenna port configurations may be provided. In the case that the CSI-RS is to be transmitted through eight antenna ports, it may be mapped to resources {1, 2, 3, 4}, i.e., an eight-antenna port configuration may be provided.

### Example 2

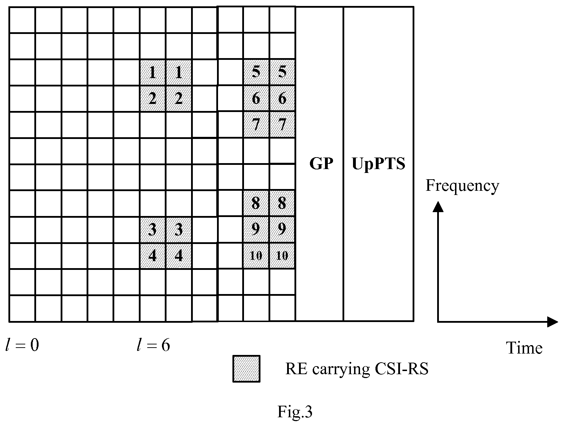

In the case that, for the ordinary CP, a special subframe configuration #3, #4 or #8 is adopted, the CSI-RS may be transmitted on the REs occupied by a symbol pair consisting of the sixth and seventh symbols and a symbol pair consisting of the tenth and eleventh symbols of the special subframe in accordance with the CSI-RS pilot resource mapping pattern specified by 3GPP TS 36.211 Release 11, other than the REs occupied by the downlink user-specific pilot signal. The resource pattern is shown in Fig.3.

For example, in the case that the CSI-RS is to be transmitted through one or two antenna ports, it may support 10 CSI-RS configurations and may be mapped to RE pairs 1 to 10. In the case that the CSI-RS is to be transmitted through four antenna ports, it may be mapped to resource pairs {1, 3}, {2, 4}, {5, 9} and {6, 10}, i.e., four kinds of four-antenna port configurations may be provided. In the case that the CSI-RS is to be transmitted through eight antenna ports, it may be mapped to resources {1, 2, 3, 4} and {5, 6, 9, 10}, i.e., two kinds of eight-antenna port configurations may be provided.

In addition, in the case that, for the extended CP, a special subframe configuration #1, #2, #3, #5 or #6 is adopted, apart from the signals or channels PSS/PDCCH/CRS, merely three symbols (i.e., the fifth symbol, the sixth symbol and the ninth symbol) are left. Hence, in the case of the extended CP, the CSI-RS pilot pattern for the extended CP specified by 3GPP TS 36.211 Release 11 may be adopted within the special subframe. At this time, the CSI-RS pilot pattern specified by 3GPP TS 36.211 Release 11 is not in conflict with the REs occupied by the downlink user-specific pilot signal within the special subframe.

It should be appreciated that, the above-mentioned RE pairs or RE groups are for illustrative purposes only, and the present disclosure is not limited thereto, i.e., any other RE pairs or RE groups may also be applicable.

The followings are some examples where the CSI-RS is transmitted on the symbol pairs consisting of the symbols other than the symbols occupied by the PDCCH, PSS and CRS within the special subframe other than the REs occupied by the downlink user-specific pilot signal.

### Example 3

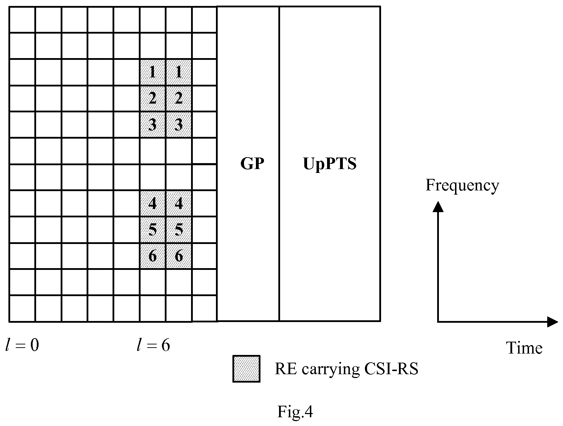

In the case that, for the ordinary CP, a special subframe configuration #1, #2, #6 or #7 is adopted, the CSI-RS may be transmitted on the REs in the fifth and sixth symbols of the special subframe other than the REs carrying the downlink user-specific pilot signal. Fig.4 shows the resource pattern.

For example, in the case that the CSI-RS is to be transmitted through one or two antenna ports, it may support 6 types of CSI-RS configurations and may be mapped to the RE pairs 1 to 6. In the case that the CSI-RS is to be transmitted through four antenna ports, it may be mapped to resource pairs {1, 5} and {2, 6}, i.e., two kinds of four-antenna port configurations may be provided. In the case that the CSI-RS is to be transmitted through eight antenna ports, it may be mapped to resources {1, 2, 5, 6}, i.e., an eight-antenna port configuration may be provided.

### Example 4

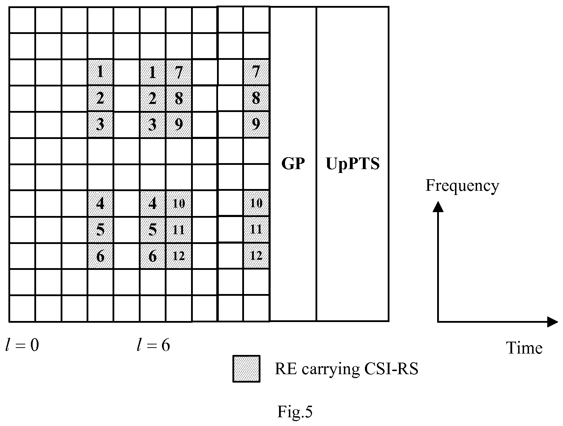

In the case that, for the ordinary CP, a special subframe configuration #2 or #7 is adopted, the CSI-RS may be transmitted on the REs in two inconsecutive symbol pairs, i.e., a symbol pair consisting of the fourth and sixth symbols and a symbol pair consisting of the seventh and tenth symbol, other than the REs carrying the downlink user-specific pilot signal. Fig.5 shows the resource pattern.

For example, in the case that the CSI-RS is to be transmitted through one or two antenna ports, it may support 12 kinds of CSI-RS configurations and may be mapped to RE pairs 1 to 12. In the case that the CSI-RS is to be transmitted through four antenna ports, it may be mapped to resource pairs {1, 5}, {2, 6}, {7, 11} and {8, 12}, i.e., four kinds of four-antenna port configurations may be provided. In the case that the CSI-RS is to be transmitted through eight antenna ports, it may be mapped to resources {1, 2, 5, 6} and {7, 8, 11, 12}, i.e., two kinds of eight-antenna port configurations may be provided.

### Example 5

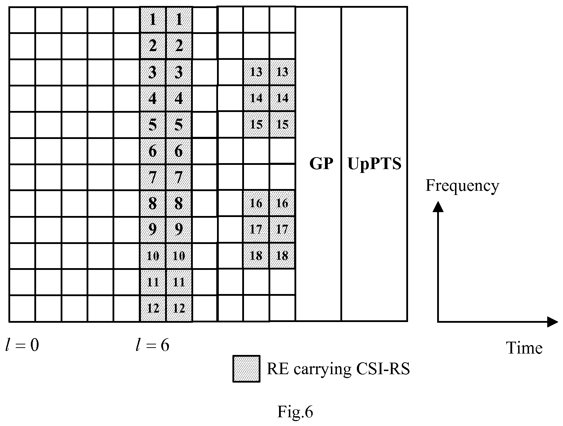

In the case that, for the ordinary CP, a special subframe configuration #3, #4 or #8 is adopted, the CSI-RS may be transmitted on REs in the symbol pairs of the special subframe, i.e., a symbol pair consisting of the sixth and seventh symbols and a symbol pair consisting of the tenth and eleventh symbols, other than the REs carrying the downlink user-specific pilot signal. Fig.6 shows the resource pattern.

For example, in the case that the CSI-RS is to be transmitted through one or two antenna ports, it may support 18 kinds of CSI-RS configurations and may be mapped to RE pairs 1 to 18. In the case that the CSI-RS is to be transmitted through fourth antenna ports, it may be mapped to resource pairs {1, 7}, {2, 8}, {3, 9}, {4, 10}, {5, 11}, {6, 12}, {13, 17} and {14, 18}, i.e., eight kinds of four-antenna port configurations may be provided. In the case that the CSI-RS is to be transmitted through eight antenna ports, it may be mapped to resources {1, 2, 7, 8}, {3, 4, 9, 10}, {5, 6, 11, 12} and {13, 14, 17, 18}, i.e., four kinds of eight-antenna port configurations may be provided.

### Example 6

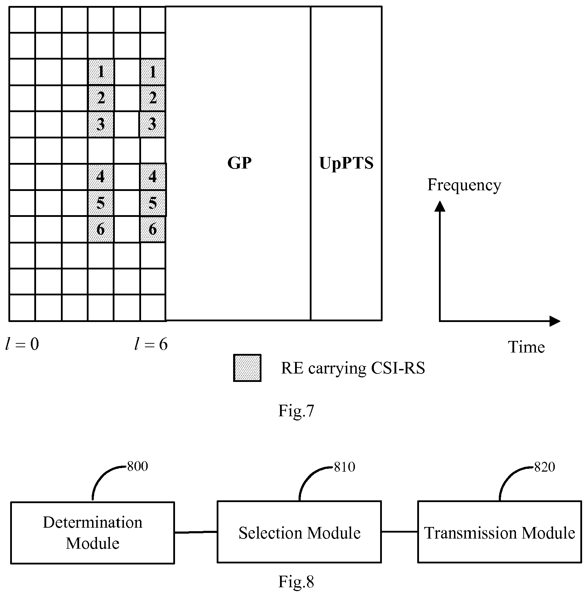

In the case that, for the ordinary CP, a special subframe configuration #9 is adopted, the CSI-RS may be transmitted on the REs in a symbol pair consisting of two inconsecutive symbols, i.e., the fourth and sixth symbols, other than the REs carrying the downlink user-specific pilot signal. Fig.7 shows the resource pattern.

For example, in the case that the CSI-RS is to be transmitted through one or two antenna ports, it may support six kinds of CSI-RS configurations and may be mapped to RE pairs 1 to 6. In the case that the CSI-RS is to be transmitted through fourth antenna ports, it may be mapped to resource pairs {1, 5} and {2, 6}, i.e., two kinds of four-antenna port configurations may be provided. In the case that the CSI-RS is to be transmitted through eight antenna ports, it may be mapped to resources {1, 2, 5, 6}, i.e., an eight-antenna port configuration may be provided.

It should be appreciated that, the above-mentioned RE pairs or RE groups are for illustrative purposes only, and the present disclosure is not limited thereto, i.e., any other RE pairs or RE groups may also be applicable.

As shown in Fig.8, the present disclosure further provides in the eighth embodiment a network side device for the system for transmitting a CSI-RS, including: a determination module 800 configured to determine that the CSI-RS is to be transmitted to a UE within a special subframe; a selection module 810 configured to select a RE corresponding to a CSI-RS pilot resource configuration from pilot resource mapping patterns of the CSI-RS within the special subframe, as a RE for carrying the CSI-RS; and a transmission module 820 configured to transmit the CSI-RS through the selected RE.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In a possible embodiment of the present disclosure, the transmission module 820 is further configured to notify the UE of pilot resource configuration information about the CSI-RS to be transmitted in the special subframe.

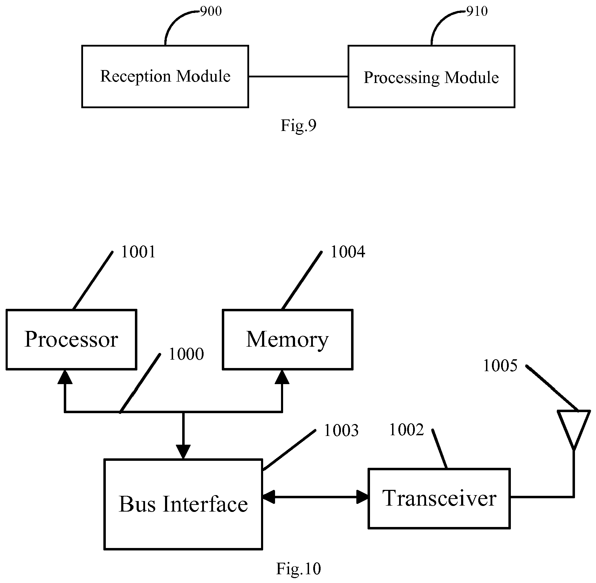

As shown in Fig.9, the present disclosure provides in the ninth embodiment a UE in the system for transmitting a CSI-RS, including a reception module 900 configured to receive from a network side device pilot resource configuration information about the CSI-RS to be transmitted in a special subframe; and a processing module 910 configured to receive the CSI-RS on a RE determined in accordance with the received pilot resource configuration information about the CSI-RS.

In a possible embodiment of the present disclosure, the pilot resource configuration about the CSI-RS is a resource configuration selected from pilot resource mapping patterns of the CSI-RS within the special subframe.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

As shown in Fig.10, the present disclosure provides in the tenth embodiment a network side device in the system for transmitting a CSI-RS, including a processor 1001, a memory 1004 and a transceiver 1002. The processor 1001 is configured to read a program stored in a memory 1001, so as to determine that the CSI-RS is to be transmitted to a UE within a special subframe, select a resource element (RE) corresponding to a CSI-RS pilot resource configuration from pilot resource mapping patterns of the CSI-RS within the special subframe, as a RE for carrying the CSI-RS, and control the transceiver 1002 to transmit the CSI-RS through the selected RE. The transceiver 1002 is configured to receive and transmit data under the control of the processor 1001.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In a possible embodiment of the present disclosure, the processor 1001 is further configured to notify the UE of pilot resource configuration information about the CSI-RS to be transmitted in the special subframe.

In Fig.10, a bus architecture 1000 may include a number of buses and bridges connected to each other, so as to connect various circuits for one or more processors 1001 and one or more memories 1004. In addition, as is known in the art, the bus architecture 1000 may be used to connect any other circuits, such as a circuit for a peripheral device, a circuit for a voltage stabilizer and a power management circuit, which are not particularly defined herein. Bus interfaces 1003 are provided between the bus architecture 1000 and the transceiver 1002, and the transceiver 1002 may consist of one element, or more than one elements, e.g., transmitters and receivers for communication with any other devices over a transmission medium. The data processed by the processor 1001 may be transmitted over a radio medium through an antenna 1005, and further the antenna 1005 may receive the data and transmit the data to the processor 1001. The processor 1001 may take charge of managing the bus architecture 1000 as well general processings, and provide various functions, such as timing, peripheral interfaces, voltage adjustment, power source management and other control functions. The memory 1004 may store data for the operation of the processor 1001.

In a possible embodiment of the present disclosure, the processor 1001 may be a Central Processing Unit (CPU), an Application Specific Integrated Circuit (ASIC), a Field-Programmable Gate Array (FPGA) or a Complex Programmable Logic Device (CPLD).

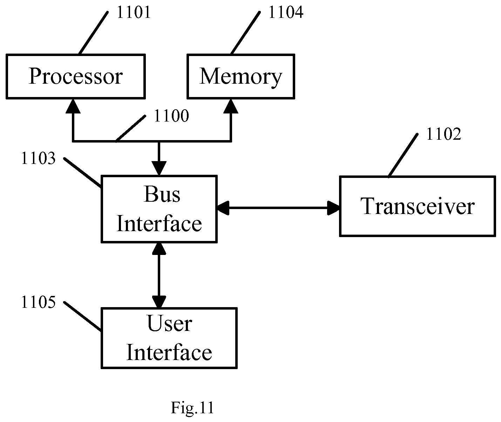

As shown in Fig.11, the present disclosure further provides in the eleventh embodiment a UE in the system for transmitting a CSI-RS, including a processor 1101, a memory 1104 and a transceiver 1102. The processor 1101 is configured to read a program stored in the memory 1104, so as to receive, through the transceiver 1102, from a network side device pilot resource configuration information about the CSI-RS to be transmitted in a special subframe, and receive the CSI-RS on a RE determined in accordance with the received pilot resource configuration information about the CSI-RS. The transceiver 1102 is configured to receive and transmit data under the control of the processor 1101.

In a possible embodiment of the present disclosure, the pilot resource configuration about the CSI-RS is a resource configuration selected from pilot resource mapping patterns of the CSI-RS within the special subframe.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In Fig. 11, a bus architecture 1100 may include a number of buses and bridges connected to each other, so as to connect various circuits for one or more processors 1101 and one or more memories 1104. In addition, as is known in the art, the bus architecture 1100 may be used to connect any other circuits, such as a circuit for a peripheral device, a circuit for a voltage stabilizer and a power management circuit, which are not particularly defined herein. Bus interfaces 1103 are provided between the bus architecture 1100 and the transceiver 1102, and the transceiver 1102 may consist of one element, or more than one elements, e.g., transmitters and receivers for communication with any other devices over a transmission medium. For example, the transceiver 1102 may receive data from the other devices, and transmit the data processed by the processor 1101 to the other devices. Depending on properties of a computer system, user interfaces 1105 may also be provided, such as a keypad, a display, a speaker, a microphone and a joystick. The processor 1101 may take charge of managing the bus architecture 1100 as well general processings, e.g., running a general-purpose operating system. The memory 1104 may store data for the operation of the processor 1101.

In a possible embodiment of the present disclosure, the processor 1101 may be a CPU, an ASIC, an FPGA or a CPLD.

Based on an identical inventive concept, the present disclosure further provides in some embodiments a method for transmitting a CSI-RS. This method may be executed by the network side device in the system for transmitting the CSI-RS, and a principle thereof is similar to that of the network side device, so the implementation of the method may refer to the implementation of the network side device, which will not be particularly defined herein.

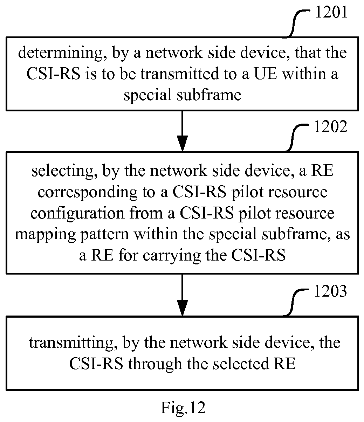

As shown in Fig.12, the present disclosure provides in the twelfth embodiment the method for transmitting the CSI-RS, including: Step 1201 of determining, by a network side device, that the CSI-RS is to be transmitted to a UE within a special subframe; Step 1202 of selecting, by the network side device, a RE corresponding to a CSI-RS pilot resource configuration from pilot resource mapping patterns of the CSI-RS within the special subframe, as a RE for carrying the CSI-RS; and Step 1203 of transmitting, by the network side device, the CSI-RS through the selected RE.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

In a possible embodiment of the present disclosure, subsequent to the step of selecting, by the network side device, the RE corresponding to the CSI-RS pilot resource configuration from the CSI-RS pilot resource mapping pattern within the special subframe, the method further includes notifying, by the network side device, the UE of pilot resource configuration information about the CSI-RS to be transmitted in the special subframe.

Based on an identical inventive concept, the present disclosure further provides in some embodiments a method for transmitting a CSI-RS. This method may be executed by the UE in the system for transmitting the CSI-RS, and a principle thereof is similar to that of the UE, so the implementation of the method may refer to the implementation of the UE, which will not be particularly defined herein.

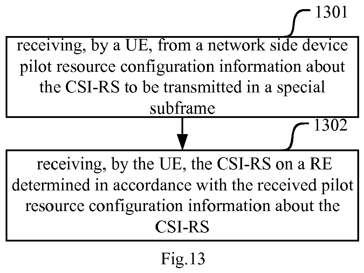

As shown in Fig.13, the present disclosure further provides in the thirteenth embodiment the method for transmitting the CSI-RS, including: Step 1301 of receiving, by a UE, from a network side device pilot resource configuration information about the CSI-RS to be transmitted in a special subframe; and Step 1302 of receiving, by the UE, the CSI-RS on a RE determined in accordance with the received pilot resource configuration information about the CSI-RS.

In a possible embodiment of the present disclosure, the pilot resource configuration about the CSI-RS is a resource configuration selected from pilot resource mapping patterns of the CSI-RS within the special subframe.

In a possible embodiment of the present disclosure, the CSI-RS pilot resource mapping pattern within the special subframe includes pilot resource mapping patterns of the CSI-RS consisting of parts or all of the REs contained in parts of pilot resource mapping patterns specified in 3GPP TS 36.211 Release 11 and capable of being transmitted within the special subframe, other than the REs carrying a downlink user-specific pilot signal. The downlink user-specific pilot signal is specified in 3GPP TS 36.211 Release 11.

In a possible embodiment of the present disclosure, parts of the pilot resource mapping patterns specified in 3GPP TS 36.211 Release 11 and capable of being transmitted within the special subframe include patterns of the pilot resource mapping patterns specified in 3GPP TS 36.211 Release 11 corresponding to parts of symbol pairs.

In a possible embodiment of the present disclosure, in the case that, for an ordinary CP, one of special subframe configurations #1, #2, #6 and #7 is adopted, the parts of symbol pairs include a symbol pair consisting of a sixth symbol and a seventh symbol; in the case that, for the ordinary CP, one of special subframe configurations #3, #4 and #8 is adopted, the parts of symbol pairs include a symbol pair consisting of the sixth symbol and the seventh symbol, and a symbol pair consisting of a tenth symbol and an eleventh symbol; in the case that, for an extended CP, one of special subframe configurations #1, #2, #3, #5 and #6 are adopted, the parts of symbol pairs include a symbol pair consisting of a fifth symbol and the sixth symbol.

In a possible embodiment of the present disclosure, the CSI-RS pilot resource mapping pattern within the special subframe includes a CSI-RS pilot resource transmission pattern consisting of parts or all of the REs in specific symbols of the specific subframe, other than the REs carrying a downlink user-specific pilot signal. The specific symbols include symbols other than symbols occupied by a PDCCH, a PSS and a CRS, and the downlink user-specific pilot signal is specified in 3GPP TS 36.211 Release 11.

In a possible embodiment of the present disclosure, in the case that, for an ordinary CP, one of special subframe configurations #1, #2, #6 and #7 is adopted, the specific symbols include a fifth symbol and a sixth symbol of the special subframe; in the case that, for the ordinary CP, one of special subframe configurations #2 and #7 is adopted, the specific symbols include a symbol pair consisting of a fourth symbol and the sixth symbol, and a symbol pair consisting of a seventh symbol and a tenth symbol; in the case that, for the ordinary CP, one of special subframe configurations #3, #4 and #8 is adopted, the specific symbols include a symbol pair consisting of the sixth symbol and the seventh symbol, and a symbol pair consisting of the tenth symbol and an eleventh symbol; and in the case that, for the ordinary CP, a special subframe configuration #9 is adopted, the specific symbols include a symbol pair consisting of the fourth symbol and the sixth symbol.

According to the embodiments of the present disclosure, the network side device may select the RE corresponding to the CSI-RS pilot resource configuration from the CSI-RS pilot resource mapping pattern within the special subframe, as the RE for carrying the CSI-RS, and transmit the CSI-RS through the selected RE. The CSI-RS may be transmitted within the special subframe, and through a channel CSI-RS pilot pattern added in the special subframe, it is able to increase, in the discovery signal burst for a TDD system, the number of the configurations that may serve as the CSI-RSs for a discovery signal, thereby to improve the system performance.

The above are merely the preferred embodiments of the present disclosure. Obviously, a person skilled in the art may make further modifications and improvements without departing from the spirit of the present disclosure, and these modifications and improvements shall also fall within the scope of the present disclosure.

## Claims

1. A method for transmitting a Channel State Information Reference Signal (CSI-RS), comprising steps of:
determining, by a network side device, that the CSI-RS is to be transmitted to a User Equipment (UE) within a special subframe;
selecting, by the network side device, a Resource Element (RE) corresponding to a CSI-RS pilot resource configuration from pilot resource mapping patterns of the CSI-RS within the special subframe, as a RE for carrying the CSI-RS; and
transmitting, by the network side device, the CSI-RS through the selected RE.

2. The method according to claim 1, wherein the CSI-RS pilot resource mapping pattern within the special subframe comprises pilot resource mapping patterns of the CSI-RS consisting of parts or all of the REs contained in parts of pilot resource mapping patterns specified in the 3^{rd} Generation Partnership Project (3GPP) Technical Specification (TS) 36.211 Release 11 and capable of being transmitted within the special subframe, other than the REs carrying a downlink user-specific pilot signal; and
the downlink user-specific pilot signal is specified in 3GPP TS 36.211 Release 11.

3. The method according to claim 2, wherein parts of the pilot resource mapping patterns specified in 3GPP TS 36.211 Release 11 and capable of being transmitted within the special subframe comprise patterns of the pilot resource mapping patterns specified in 3GPP TS 36.211 Release 11 corresponding to parts of symbol pairs.

4. The method according to claim 3, wherein
in the case that, for an ordinary Cyclic Prefix (CP), one of special subframe configurations #1, #2, #6 and #7 is adopted, the parts of symbol pairs comprise a symbol pair consisting of a sixth symbol and a seventh symbol;
in the case that, for the ordinary CP, one of special subframe configurations #3, #4 and #8 is adopted, the parts of symbol pairs comprise a symbol pair consisting of the sixth symbol and the seventh symbol, and a symbol pair consisting of a tenth symbol and an eleventh symbol; and
in the case that, for an extended CP, one of special subframe configurations #1, #2, #3, #5 and #6 are adopted, the parts of symbol pairs comprise a symbol pair consisting of a fifth symbol and the sixth symbol.

5. The method according to claim 1, wherein the CSI-RS pilot resource mapping pattern within the special subframe comprises a CSI-RS pilot resource transmission pattern consisting of parts or all of the REs in specific symbols of the specific subframe, other than the REs carrying a downlink user-specific pilot signal; and
the specific symbols comprise symbols other than symbols occupied by a Physical Downlink Control Channel (PDCCH), a Primary Synchronization Signal (PSS) and a Cell-specific Reference Signal (CRS), and the downlink user-specific pilot signal is specified in 3GPP TS 36.211 Release 11.

6. The method according to claim 5, wherein
in the case that, for an ordinary CP, one of special subframe configurations #1, #2, #6 and #7 is adopted, the specific symbols comprise a fifth symbol and a sixth symbol of the special subframe;
in the case that, for the ordinary CP, one of special subframe configurations #2 and #7 is adopted, the specific symbols comprise a symbol pair consisting of a fourth symbol and the sixth symbol, and a symbol pair consisting of a seventh symbol and a tenth symbol;
in the case that, for the ordinary CP, one of special subframe configurations #3, #4 and #8 is adopted, the specific symbols comprise a symbol pair consisting of the sixth symbol and the seventh symbol, and a symbol pair consisting of the tenth symbol and an eleventh symbol; and
in the case that, for the ordinary CP, a special subframe configuration #9 is adopted, the specific symbols comprise a symbol pair consisting of the fourth symbol and the sixth symbol.

7. The method according to any one of claims 1 to 6, wherein subsequent to the step of selecting, by the network side device, the RE corresponding to the CSI-RS pilot resource configuration from the CSI-RS pilot resource mapping pattern within the special subframe, the method further comprises:
notifying, by the network side device, the UE of pilot resource configuration information about the CSI-RS to be transmitted in the special subframe.

8. A method for transmitting a Channel State Information Reference Signal (CSI-RS), comprising steps of:
receiving, by a User Equipment (UE), from a network side device pilot resource configuration information about the CSI-RS to be transmitted in a special subframe; and
receiving, by the UE, the CSI-RS on a Resource Element (RE) determined in accordance with the received pilot resource configuration information about the CSI-RS.

9. The method according to claim 8, wherein the pilot resource configuration about the CSI-RS is a resource configuration selected from pilot resource mapping patterns of the CSI-RS within the special subframe.

10. The method according to claim 9, wherein the CSI-RS pilot resource mapping pattern within the special subframe comprises pilot resource mapping patterns of the CSI-RS consisting of parts or all of the REs contained in parts of pilot resource mapping patterns specified in the 3^{rd} Generation Partnership Project (3GPP) Technical Specification (TS) 36.211 Release 11 and capable of being transmitted within the special subframe, other than the REs carrying a downlink user-specific pilot signal; and
the downlink user-specific pilot signal is specified in 3GPP TS 36.211 Release 11.

11. The method according to claim 10, wherein parts of the pilot resource mapping patterns specified in 3GPP TS 36.211 Release 11 and capable of being transmitted within the special subframe comprise patterns of the pilot resource mapping patterns specified in 3GPP TS 36.211 Release 11 corresponding to parts of symbol pairs.

12. The method according to claim 11, wherein
in the case that, for an ordinary Cyclic Prefix (CP), one of special subframe configurations #1, #2, #6 and #7 is adopted, the parts of symbol pairs comprise a symbol pair consisting of a sixth symbol and a seventh symbol;
in the case that, for the ordinary CP, one of special subframe configurations #3, #4 and #8 is adopted, the parts of symbol pairs comprise a symbol pair consisting of the sixth symbol and the seventh symbol, and a symbol pair consisting of a tenth symbol and an eleventh symbol; and
in the case that, for an extended CP, one of special subframe configurations #1, #2, #3, #5 and #6 are adopted, the parts of symbol pairs comprise a symbol pair consisting of a fifth symbol and the sixth symbol.

13. The method according to claim 9, wherein the CSI-RS pilot resource mapping pattern within the special subframe comprises a CSI-RS pilot resource transmission pattern consisting of parts or all of the REs in specific symbols of the specific subframe, other than the REs carrying a downlink user-specific pilot signal; and
the specific symbols comprise symbols other than symbols occupied by a Physical Downlink Control Channel (PDCCH), a Primary Synchronization Signal (PSS) and a Cell-specific Reference Signal (CRS), and the downlink user-specific pilot signal is specified in 3GPP TS 36.211 Release 11.

14. The method according to claim 13, wherein
in the case that, for an ordinary CP, one of special subframe configurations #1, #2, #6 and #7 is adopted, the specific symbols comprise a fifth symbol and a sixth symbol of the special subframe;
in the case that, for the ordinary CP, one of special subframe configurations #2 and #7 is adopted, the specific symbols comprise a symbol pair consisting of a fourth symbol and the sixth symbol, and a symbol pair consisting of a seventh symbol and a tenth symbol;
in the case that, for the ordinary CP, one of special subframe configurations #3, #4 and #8 is adopted, the specific symbols comprise a symbol pair consisting of the sixth symbol and the seventh symbol, and a symbol pair consisting of the tenth symbol and an eleventh symbol; and
in the case that, for the ordinary CP, a special subframe configuration #9 is adopted, the specific symbols comprise a symbol pair consisting of the fourth symbol and the sixth symbol.

15. A network side device for transmitting a Channel State Information Reference Signal (CSI-RS), comprising:
a determination module configured to determine that the CSI-RS is to be transmitted to a User Equipment (UE) within a special subframe;
a selection module configured to select a Resource Element (RE) corresponding to a CSI-RS pilot resource configuration from pilot resource mapping patterns of the CSI-RS within the special subframe, as a RE for carrying the CSI-RS; and
a transmission module configured to transmit the CSI-RS through the selected RE.

16. The network side device according to claim 15, wherein the CSI-RS pilot resource mapping pattern within the special subframe comprises pilot resource mapping patterns of the CSI-RS consisting of parts or all of the REs contained in parts of pilot resource mapping patterns specified in the 3^{rd} Generation Partnership Project (3GPP) Technical Specification (TS) 36.211 Release 11 and capable of being transmitted within the special subframe, other than the REs carrying a downlink user-specific pilot signal; and
the downlink user-specific pilot signal is specified in 3GPP TS 36.211 Release 11.

17. The network side device according to claim 16, wherein parts of the pilot resource mapping patterns specified in 3GPP TS 36.211 Release 11 and capable of being transmitted within the special subframe comprise patterns of the pilot resource mapping patterns specified in 3GPP TS 36.211 Release 11 corresponding to parts of symbol pairs.

18. The network side device according to claim 17, wherein
in the case that, for an ordinary Cyclic Prefix (CP), one of special subframe configurations #1, #2, #6 and #7 is adopted, the parts of symbol pairs comprise a symbol pair consisting of a sixth symbol and a seventh symbol;
in the case that, for the ordinary CP, one of special subframe configurations #3, #4 and #8 is adopted, the parts of symbol pairs comprise a symbol pair consisting of the sixth symbol and the seventh symbol, and a symbol pair consisting of a tenth symbol and an eleventh symbol; and
in the case that, for an extended CP, one of special subframe configurations #1, #2, #3, #5 and #6 are adopted, the parts of symbol pairs comprise a symbol pair consisting of a fifth symbol and the sixth symbol.

19. The network side device according to claim 15, wherein the CSI-RS pilot resource mapping pattern within the special subframe comprises a CSI-RS pilot resource transmission pattern consisting of parts or all of the REs in specific symbols of the specific subframe, other than the REs carrying a downlink user-specific pilot signal; and
the specific symbols comprise symbols other than symbols occupied by a Physical Downlink Control Channel (PDCCH), a Primary Synchronization Signal (PSS) and a Cell-specific Reference Signal (CRS), and the downlink user-specific pilot signal is specified in 3GPP TS 36.211 Release 11.

20. The network side device according to claim 19, wherein
in the case that, for an ordinary CP, one of special subframe configurations #1, #2, #6 and #7 is adopted, the specific symbols comprise a fifth symbol and a sixth symbol of the special subframe;
in the case that, for the ordinary CP, one of special subframe configurations #2 and #7 is adopted, the specific symbols comprise a symbol pair consisting of a fourth symbol and the sixth symbol, and a symbol pair consisting of a seventh symbol and a tenth symbol;
in the case that, for the ordinary CP, one of special subframe configurations #3, #4 and #8 is adopted, the specific symbols comprise a symbol pair consisting of the sixth symbol and the seventh symbol, and a symbol pair consisting of the tenth symbol and an eleventh symbol; and
in the case that, for the ordinary CP, a special subframe configuration #9 is adopted, the specific symbols comprise a symbol pair consisting of the fourth symbol and the sixth symbol.

21. The network side device according to any one of claims 15 to 20, wherein the transmission module is further configured to notify the UE of pilot resource configuration information about the CSI-RS to be transmitted in the special subframe.

22. A User Equipment (UE) for transmitting a Channel State Information Reference Signal (CSI-RS), comprising:
a reception module configured to receive from a network side device pilot resource configuration information about the CSI-RS to be transmitted in a special subframe; and
a processing module configured to receive the CSI-RS on a Resource Element (RE) determined in accordance with the received pilot resource configuration information about the CSI-RS.

23. The UE according to claim 22, wherein the pilot resource configuration about the CSI-RS is a resource configuration selected from pilot resource mapping patterns of the CSI-RS within the special subframe.

24. The UE according to claim 23, wherein the CSI-RS pilot resource mapping pattern within the special subframe comprises pilot resource mapping patterns of the CSI-RS consisting of parts or all of the REs contained in parts of pilot resource mapping patterns specified in the 3^{rd} Generation Partnership Project (3GPP) Technical Specification (TS) 36.211 Release 11 and capable of being transmitted within the special subframe, other than the REs carrying a downlink user-specific pilot signal; and
the downlink user-specific pilot signal is specified in 3GPP TS 36.211 Release 11.

25. The UE according to claim 24, wherein parts of the pilot resource mapping patterns specified in 3GPP TS 36.211 Release 11 and capable of being transmitted within the special subframe comprise patterns of the pilot resource mapping patterns specified in 3GPP TS 36.211 Release 11 corresponding to parts of symbol pairs.

26. The UE according to claim 25, wherein
in the case that, for an ordinary Cyclic Prefix (CP), one of special subframe configurations #1, #2, #6 and #7 is adopted, the parts of symbol pairs comprise a symbol pair consisting of a sixth symbol and a seventh symbol;
in the case that, for the ordinary CP, one of special subframe configurations #3, #4 and #8 is adopted, the parts of symbol pairs comprise a symbol pair consisting of the sixth symbol and the seventh symbol, and a symbol pair consisting of a tenth symbol and an eleventh symbol; and
in the case that, for an extended CP, one of special subframe configurations #1, #2, #3, #5 and #6 are adopted, the parts of symbol pairs comprise a symbol pair consisting of a fifth symbol and the sixth symbol.

27. The UE according to claim 23, wherein the CSI-RS pilot resource mapping pattern within the special subframe comprises a CSI-RS pilot resource transmission pattern consisting of parts or all of the REs in specific symbols of the specific subframe, other than the REs carrying a downlink user-specific pilot signal; and
the specific symbols comprise symbols other than symbols occupied by a Physical Downlink Control Channel (PDCCH), a Primary Synchronization Signal (PSS) and a Cell-specific Reference Signal (CRS), and the downlink user-specific pilot signal is specified in 3GPP TS 36.211 Release 11.

28. The UE according to claim 27, wherein
in the case that, for an ordinary CP, one of special subframe configurations #1, #2, #6 and #7 is adopted, the specific symbols comprise a fifth symbol and a sixth symbol of the special subframe;
in the case that, for the ordinary CP, one of special subframe configurations #2 and #7 is adopted, the specific symbols comprise a symbol pair consisting of a fourth symbol and the sixth symbol, and a symbol pair consisting of a seventh symbol and a tenth symbol;
in the case that, for the ordinary CP, one of special subframe configurations #3, #4 and #8 is adopted, the specific symbols comprise a symbol pair consisting of the sixth symbol and the seventh symbol, and a symbol pair consisting of the tenth symbol and an eleventh symbol; and
in the case that, for the ordinary CP, a special subframe configuration #9 is adopted, the specific symbols comprise a symbol pair consisting of the fourth symbol and the sixth symbol.

29. A system for transmitting a Channel State Information Reference Signal (CSI-RS), comprising a network side device and a User Equipment (UE), wherein
the network side device comprises a determination module configured to determine that the CSI-RS is to be transmitted to the UE within a special subframe, a selection module configured to select a Resource Element (RE) corresponding to a CSI-RS pilot resource configuration from pilot resource mapping patterns of the CSI-RS within the special subframe, as a RE for carrying the CSI-RS, and a transmission module configured to transmit the CSI-RS through the selected RE; and
the UE comprises a reception module configured to receive from the network side device pilot resource configuration information about the CSI-RS to be transmitted in the special subframe, and a processing module configured to receive the CSI-RS on the RE determined in accordance with the received pilot resource configuration information about the CSI-RS.
